# EUROPEAN PATENT SPECIFICATION

(11) **EP 3 023 684 B1**
(45) Date of publication and mention of the grant of the patent: **19.06.2019**
(21) Application number: 14883841.0
(22) Date of filing: 28.02.2014
(51) Int. Cl.: F16L 59/14, F16L 9/18, F16L 59/16, F16L 59/20

(54) **HEAT-INSULATED PIPE AND PIPELINE SECTION WITH HYDROPROTECTION ALONG THE EXTERNAL SURFACE AND ALONG THE ENDS**
WÄRMEGEDÄMMTES ROHR SOWIE ROHRLEITUNGSABSCHNITT MIT FEUCHTIGKEITSSCHUTZ ENTLANG DER AUSSENFLÄCHE SOWIE ENTLANG DER ENDEN
TUBE À ISOLATION THERMIQUE ET SECTION DE CONDUIT AVEC PROTECTION HYDRAULIQUE SUR LA SURFACE EXTERNE ET AUX EXTRÉMITÉS

(43) Date of publication of application: 25.05.2016
(73) Proprietor: Obschestvo S Ogranichennoy Otvetstvennostiyu "Smit-Yartsevo", Smolenskaya obl. 215800 (RU)
(72) Inventor: PAVLYUK, Evgeniy Sergeevich, Mogilev 212030 (BY); NARKEVICH, Sergey Leonidovich, Mogilev 212030 (BY)
(74) Representative: Sloboshanin, Sergej
(86) International application number: PCT/RU2014/000132
(87) International publication number: WO 2015/130188

(56) References cited:
- WO-A1-2012/004135
- DE-A1- 4 324 051
- GB-A- 2 138 916
- RU-C2- 2 249 756
- RU-C2- 2 273 787
- RU-U1- 95 061
- RU-U1- 95 061
- US-B2- 8 231 952

## Description

The invention relates to the field of manufacturing preliminarily insulated pipes and shaped products applied in pipelines in the thermal energy sector, in the construction of heat networks, networks for cold and hot water supply etc.

Energy-efficient heat-insulated pipes are widely used in various areas of human activity:
A preliminarily insulated pipe is an integral construction of the "pipe in pipe" type, consisting of an internal working (metal or polymer) pipe with centering supports, a heat insulation layer applied on the working pipe, a remote operation control system (ROCS) or a leak detection system (LDS) and an external hydroprotective pipe casing.

Preliminarily insulated shaped products for pipelines (hereafter referred to as shaped products) are constructed in a corresponding manner and are provided for changing the direction, merging or separating, widening or narrowing of the heat carrier flow. The shaped products used are branches, junctions, T-pieces and other elements required for a full function of the pipeline or pipeline system.

The basic shortcomings of the generally applied constructions of heat-insulated pipes and shaped products are: the moistening of the insulation layer in case of a leakage; the lack of protection of the open sections of the insulation from the influence of adverse atmospheric factors, particularly ultraviolet radiation, oxidative processes, wetting during storage etc.; the presence of open sections along the ends of the heat-insulated pipe resulting in a mechanical damage of the insulation layer, for instance during transportation and assembly.

In individual cases the insulation layer is protected by heat sink cuffs at the ends of the pipe and the shaped products or is treated with appropriate cements to reduce the effects of the above-mentioned adverse factors and to maintain the quality parameters, which results in an increase in labour, material consumption and costs of the finished product.

A heat-insulated pipe is known which is produced with the method according to Patent Application US 2007074778, April 5, 2007. This heat-insulated pipe comprises coaxially arranged pipes sliding with respect to each other with a controllable friction. In the process of manufacturing the heat-insulated pipe a membrane is applied on the internal surface of the external pipe and/or on the external surface of the internal working pipe without adhesive and lubricating materials, a series of braces (centering elements) made of heat insulation material is fastened on the internal working pipe, the external pipe is connected to the internal bearing pipe and the external pipe is centered on the internal pipe, sealing plugs are mounted on the ends of said pipes, the plugs are connected with the pipes, a liquid foaming material is supplied through the plug or plugs, which as a result of subsequent foaming completely fills the cavity between the pipes, the foamed heat insulation material is allowed to harden sufficiently, whereafter the plugs are removed, the result being the finished pipes.

A heat-insulated pipe is known (Russian Federation Patent RU 2273787, September 20, 2004) comprising a working pipe, a casing and a heat insulation layer in an annular gap between them. When foaming material, for instance polyurethane foam, is used as the heat insulation, the annular gaps at the ends are closed by plugs which are hermetically sealed by collars fixed by locking bolts on the working pipe. Subsequently the annular gap is filled with foaming heat insulation material through an opening.

In the above-described prior art detachable plugs, collars and compression elements for obtaining a hermetical seal between the internal working (metal or polymer) pipe and the external hydroprotective pipe casing are used to prevent an escape of the foaming insulation components. Unfortunately, such plugs are not very effective technologically and have a number of disadvantageous features such as the labour-intensity of the technical operations to install and/or deinstall them, the material consumption, the increased mass etc., while in the process of manufacturing the insulated pipes and shaped products this leads to a leakage of the foaming heat insulation from the inter-pipe space in the formation and polymerisation phase, an excess use of the basic raw material, the occurrence of additional waste, an increase of the production costs, an impact of negative atmospheric factors on the open sections of the insulation etc.

A heat-insulated pipe is known (Russian Federation Patent RU 2221184, January 10, 2004) comprising a working pipe, a casing, centering elements arranged in an annular gap between the casing and the pipe, filled with air as heat insulation material, and annular plugs arranged on the ends. The annular plugs are shaped as a truncated cone with an external and an internal conicity, large bases facing in opposite directions, wherein the assembled system of casing - plugs - pipe forms a sealed annular chamber filled with air, while to remove excess pressure building up from the heating of the air during operation, the casing is provided with a compensation valve. During the manufacturing of the heat-insulated pipe the centering elements are attached to the working pipe, subsequently the working pipe with the centering elements is arranged coaxially within the casing, with the compensation valve mounted. Subsequently the ends are sealed by the plugs having a truncated cone shape, the plugs are arranged along the ends so that their large bases are facing to opposite sides. Since in this construction air serves as the heat insulation material, a sealing composition is applied on the conical surfaces of the plugs, while on the casing the seams in the joints are also sealed with a sealing composition.

This prior art does not allow to obtain a heat-insulated pipe in which: liquid materials forming foamed polymers of different kinds are used as the components forming the heat insulation layer, without usage of sealing materials and a compensation valve, and in which the end plugs fulfil a number of functions, the first of which being a servicing function in connection with the pipe manufacturing, the second function of the same plug being constructive in connection with which the plug is used as an element of the finished pipe, enabling on the one hand the sealing of the heat insulation layer and on the other hand making it possible to access the heat insulation layer etc.

A heat-insulated pipe is known which is manufactured by the method according to International Application WO 2012004135, January 12, 2012 (most pertinent prior art). This heat-insulated pipe comprises an internal (working) pipe of metal or closed-cell polymer, heat insulation material and an external pipe of polymer-based material. The heat-insulated pipe is manufactured in a detachable mould by forming the heat insulation material on the internal pipe. Before it is placed in the detachable mould, the internal (working) pipe is enclosed in a pipe-shaped flexible jacket open at the ends and enveloping the internal pipe. The pipe-shaped flexible jacket is preferably evacuated so that it tightly envelopes the internal (working) pipe. At the ends of the internal pipe end plugs are preliminarily arranged, fastened to the internal pipe, while the flexible pipe-shaped jacket is guided to the outside, enveloping the external peripheral surface of the end plugs or leaving the ends of the jacket on the inside. The contact surfaces between the internal pipe, the end plugs and the flexible pipe-shaped jacket are preferably sealed until the moulding process begins. After closing the mould around the internal pipe, the cavity between the internal pipe and the bag can be filled with pressurised air or gas, for instance inert gas. To make sure that the liquid heat insulation material is foamed properly, the end plugs are provided with ventilation openings. The end plugs can comprise at least one injection opening and at least one ventilation opening. Subsequently the internal pipe is placed into the detachable mould, further the components of the heat insulation material in liquid state are injected into the space between the internal pipe and the flexible pipe-shaped jacket, as a result of which the heat insulation material is foamed in that space and subsequently hardened, forming a hard heat insulation layer. In an alternative version the flexible pipe-shaped jacket is arranged around the entire internal pipe so that the edges of the jacket are arranged between the internal pipe and the end plugs. The heat insulation material in liquid state is introduced with the help of a tube or a similar device attached to the flexible pipe-shaped jacket at one end. As a result, the entire heat insulation material is enclosed inside the jacket in the moulding process. Under the influence of the expanding foaming heat insulation material in the course of the foaming the flexible pipe-shaped jacket is pressed against the internal wall of the detachable mould. The upper part of the mould as well as the plug have ventilation openings to release excess pressure built up during the foaming of the heat insulation material. The surfaces of the end plugs facing the cavity filled with the heat insulation material can have various geometries depending on the type of insulation pipe to be manufactured, for instance, they can be vertical or inclined or have a parabolic shape with an apex situated on the axis of the internal (working) pipe. The manufactured internal insulation pipe is ready to be connected to the external pipe to protect the insulation material. In the next step the internal pipe with the insulation layer and the external pipe are joined to each other through the flexible pipe-shaped jacket enveloping the heat insulation and the internal pipe enclosed therein. The flexible pipe-shaped jacket can be covered with an adhesive composition and/or treated by corona discharge to obtain a better adhesion between it, the insulation layer and the external pipe.

This prior art makes it possible to obtain a heat-insulated pipe with a heat insulation layer hermetically enclosed between the external pipe, the internal (working) pipe and the end plugs, however, this manufacturing process comprises two separate technical stages: The first one is the sealing and the application of the insulation layer on the working pipe, the second is the application of the hydroinsulation layer by extrusion. Such a construction is, first, complex in manufacturing, since special moulds fitting each type and size of pipe are required for its manufacturing; additional operations in connection with the arrangement of the flexible pipe-shaped element and evacuation have to be carried out; it is suggested to use additional materials, namely the flexible pipe-shaped jacket, while the given construction does not provide for the possibility of visually controlling the heat insulation without taking off the end plug. DE4324051 A1, January 19, 1995, discloses also a heat-insulated pipe.

The task underlying the invention is the creation of a heat-insulated pipe construction forming a separate sealed section of a pipeline with hydroprotection along the external surface and along the ends, easy to manufacture with improved technical properties, making it possible to reduce the number of technical operations and to reduce the production waste and also being an improvement of the exploitation parameters, providing an increase in the useful life of the pipeline systems in which the heat-insulated pipes of the inventive construction are used.

The task is solved by a heat-insulated pipe including the technical features of claim 1 and can be described as follows: At the end sides of a heat-insulated pipe and/or a shaped product disposable end plugs of the inventive construction are arranged which fulfil the necessary functions in connection with the technical manufacturing process, in the process of which the heat-insulated pipe is obtained without usage (application) of sealing compositions, without application of additional operations and materials, and also with a protection of the heat insulation layer from the influence of negative factors developing during storage, transport, assembly and exploitation of the heat-insulated pipe.

Like the most pertinent prior art, the inventive technical solution, namely the heat-insulated pipe, forms a "pipe in pipe" construction and comprises an internal working pipe, an external hydroprotective pipe casing, a heat insulation layer located in an annular space between them, and also end plugs, each of which is provided with an axial opening to receive the working pipe and arranged on the working pipe at its ends, wherein openings are provided in the end plug, of which at least one is provided for pouring a foaming heat insulation composition during manufacturing of the heat-insulated pipe, while the other (one, two or more) is provided to connect the cavity for arranging the heat insulation layer with the external environment (atmosphere) in the process of foaming and hardening of the heat insulation composition during manufacturing of the heat-insulated pipe.

Further features of the inventive heat-insulated pipe which provide a solution of the task underlying the invention are that a separate section of the pipeline with hydroprotection along its external surface and along its ends can be made of it, wherein the nondetachable connection of the end plugs with the hydroprotective pipe casing (welding, glueing etc.) creates a closed space between the construction elements (the working pipe, the external hydroprotective pipe casing, the plugs), wherein there is an opening (or openings) in the plug for communication of the space with the external environment, where the heat insulation layer is arranged (between the external pipe casing and the working pipe), covered with a perforated section (for instance with a plane element with a perforation in any shape or a screen with meshes in a particular size), the plug is equipped with one, two or more additional openings provided for guiding out the elements (conductors, data buses etc.) of the system for monitoring the state of the heat insulation layer (ROCS, LDS), all openings in the plug including the additional ones usually have the same size so that they can be hermetically sealed by stoppers of the same size, while the finished product forms a pipe as a separate, sealed element (section) of the pipeline with hydroprotection not only along the external surface but also along the ends. Each opening in the plug is surrounded on its internal side by a hollow, generally cylindrical protrusion with an internal thread into which a threaded stopper is inserted, wherein in the opening for a communication of the inter-pipe space with the external environment the perforated section is provided in the centre of the cylindrical protrusion, while the threaded stopper is screwed into the cylindrical protrusion with the perforated section from the outside of the plug. The cylindrical protrusions around the openings in the plug can be provided without a thread, in which case the stopper is fixed by any known method.

On the inside of the plugs in the area where the additional openings are arranged there are cavities provided around said openings, which are formed by the cylindrical protrusions (a small conicity of the external surface of the protrusion is possible) in the shape of a hollow sleeve with a small opening in the bottom for the elements of the system for monitoring the state of the heat insulation layer to pass through, the walls of the sleeve being provided with a thread to receive the threaded stopper. After the threaded stopper is screwed in, the elements of the system for monitoring the state of the heat insulation layer are insulated from the external environment, thus safeguarding their working condition.

For the other openings, including the openings with a perforated section, protrusions - flanges with an opening through them having an external cylindrical or conical shape and an internal cylindrical or conical surface, preferably also with a thread to receive the threaded stoppers - are provided on the internal side of the plug around said openings.

Moreover if threaded stoppers are used it is preferred that each threaded stopper is provided with a groove, for instance to receive a screwdriver or coin for comfortable work.

One or several stoppers may not be threaded (the flanges will then not be threaded, either). In that case the sealing connection of the stoppers with the end plug can be carried out by any known method, providing, for example, a non-detachable connection of the stopper with the plug by welding or adhesive joining etc., or providing a detachable connection, for example by press-fitting, wherein the stopper can be provided with a ring to extract the stopper from the plug opening, or in the shape of a bayonet joint.

Preferably the size (diameter) of the perforation openings of the perforated section is 0.1-3.0 mm, which makes it possible for the reaction gases of the foaming components reacting with each other to exit to the outside when the heat insulation layer is formed in the process of manufacturing the heat-insulated pipe. These openings are not used during exploitation of the heat-insulated pipe and are closed with an nondetachable stopper (by glueing or welding) after the technical process of manufacturing the pipe is completed.

The end plugs can be manufactured monolithically or as compositions, made up of several parts. In the second case the parts of the plug must be combined into an integral construction before assembly. The use of combined plugs consisting of several parts is more rational when producing large diameter pipes.

The materials used for manufacturing the hydroprotective pipe casing and/or the working pipe and/or the plugs and/or the threaded stoppers can be polymer materials, for instance polyethylene, including low-density, medium-density and high-density polyethylene. It is also possible to use other materials allowing a reprocessing (ferrous and non-ferrous metals, composition materials etc.) or their combinations. For instance, the working pipe 1 can be metallic while the pipe casing 2 and the end plugs 4 are made of polymers, for example pipe-grade low-density polyethylene.

The technical result of the use of the invention lies in a simplification of the construction of the heat-insulated pipe, a simplification of its manufacturing technology with a simultaneous reduction of the risk of negative effects on the heat insulation layer of the finished heat-insulated pipe to maintain its qualitative properties while simultaneously increasing the useful life of the heat-insulated pipe through a reliable sealing of the heat insulation layer not only lengthwise but also along the ends, moreover at the same time an increase of the useful life of the pipeline system is achieved with this combination of features in which the heat-insulated pipes of the inventive construction are used, each of which forms a separate sealing element of the pipeline with hydroprotection along the external surface and along the ends, as a result of which in an accident a leak of working fluid (for instance heat carrier) beyond the boundaries of the accident site, limited only by the heat-insulated pipe or shaped product, into adjacent sections of the pipeline is prevented.

The achievement of each of said results depends on the use of all characterising features of the device, namely: the use in the construction of the heat-insulating pipe of uniform multifunctional end plugs arranged along the ends with openings having different functions, one of which is used in the manufacturing stage for pouring the foaming heat insulation material and subsequently in the finished product for controlling the state of he heat insulation layer, in another opening a perforated section required in the manufacturing of the heat insulation layer is provided. Additional openings provided in the plug are used in the pipe manufacturing stage (to arrange the ROCS and/or LDS elements) as well as in the finished product and are necessary in the transport and storage of the pipe, since in the sealed cavity (in the sleeve) the elements of the system for monitoring the state of the heat insulation layer are held in place by the closed stopper (avoiding their damage and oxidation). All openings in the plug preferably have the same diameter and can be hermetically sealed by unified stoppers, usually threaded ones, which enables an access to the heat insulation layer for control purposes at any time. Thus the detachment-attachment of the threaded stoppers from the openings of the plugs allows to use the plugs for different purposes. The stoppers or part of the stoppers can be attached with the help of other detachable combinations, while some of the stoppers, for instance on the opening with the perforated section, can be attached in a non-detachable way.

In the manufacturing stage of the heat-insulated pipe the end plugs fulfil, first, the function of a constructive element through the additional openings of which the elements of the system for monitoring the state of the heat insulation layer are passed, for which purpose the stoppers on both plugs situated on opposite ends are opened (taken off), the conductors of the ROCS and/or LDS are guided out, these ends are twisted, placed in the sleeve, and the stopper is screwed in. Second, in the stage of manufacturing the pipe or the shaped product, the plugs play the part of an element of the finished pipe and the technical apparatus, sealing the space between the working pipe and the hydroprotective pipe casing, while in one of the plugs an opening for positioning the means of feeding the foaming composition is opened (the threaded stopper is taken off), while the open opening with the perforated section serves to discharge the excess pressure of gases that develop in the foaming process from the space between the working pipe and the pipe casing. The sealing of the volume taken up by the heat insulation is achieved by means of the plugs, which are nondetachably and hermetically connected to the hydroprotective pipe casing and hermetically seated on the working pipe forming a separate sealed section of the pipeline, sealed with regard to the external surface (the pipe casing) and to the ends (the plugs). This implementation prevents a leak of liquid flowing reaction composition of the insulation, for instance polyurethane foam, from the inter-pipe space through the servicing gaps. Thus the necessary and calculated amount of components is used only for the formation of the heat insulation layer without losses through the gaps.

From a technical point of view the presence of identically constructed plugs along the ends of the heat-insulated pipe, which are hermetically connected to the working pipe (for instance by press-fitting) and nondetachably joined to the pipe casing (by welding, glueing etc.), makes it possible to simplify the technical production of the pipe, since the use of such a construction of the plug abolishes superfluous technical steps in manufacturing the heat-insulated pipe as a separate sealing section of the pipeline.

From a construction point of view the finished product obtained in accordance with the technology using the plugs of the inventive heat-insulated pipe offers hydroprotection not only along the length of the product (this is achieved by the hydroprotective pipe casing) but also along the ends, since the plugs are nondetachably and hermetically connected to the hydroprotective pipe casing and hermetically connected to the working pipe, while the openings are closed by the stoppers.

When the heat-insulated pipe of the invention is used in a pipeline system, the section on which the heat-insulated pipe is arranged forms a separate hydroprotective element (a separate hydroprotective pipeline section) reliably protected on all sides from the impact of the environment. The presence of the openings closed by the stoppers allows, if the need arises (repair, preventive maintenance), to gain access to the heat insulation layer at any time, e.g. for an inspection or control of the quality of the heat insulation material, without taking the entire plug off. After completion of the inspection the opening is closed by the threaded stopper, the hermetical sealing of the internal space is established.

The use of the inventive heat-insulated pipes allows to achieve the following technical effects and properties: to simplify the technical production (to reduce the number of steps of the technical process), to provide a stable quality of the heat-insulated pipes by obtaining a heat insulation layer with a calculated heat transfer coefficient due to the optimum conditions for the formation of the heat insulation layer, thereby reducing the losses of liquid reactive polyurethane foam composition from the inter-pipe space through the servicing gaps.

The invention is explained by the drawings, which show:

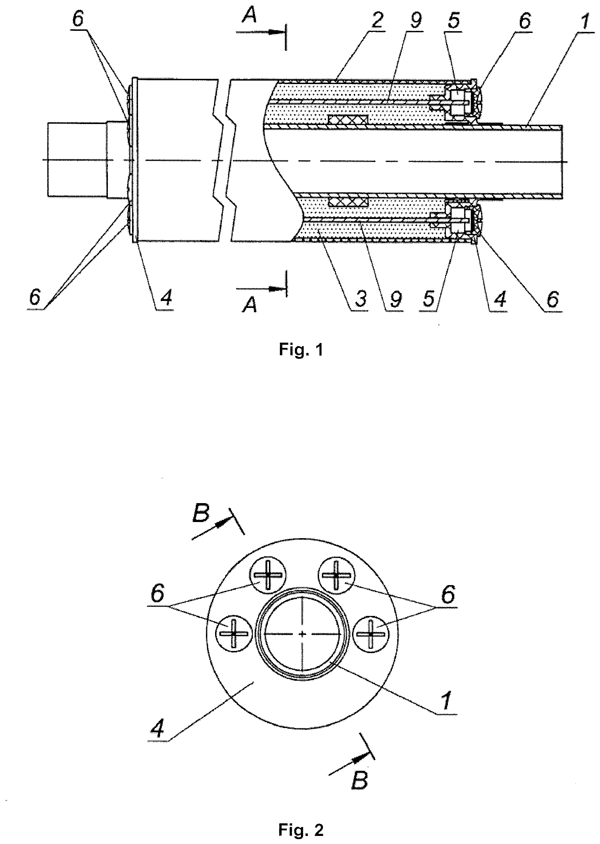

- Fig. 1:: the heat-insulated pipe in assembled state, top view.
- Fig. 2:: the heat-insulated pipe in assembled state, view from the left.
- Fig. 3:: an axonometric projection of the heat-insulated pipe along section A-A in Fig. 1, view with threaded stoppers detached.
- Fig. 4:: the heat-insulated pipe in assembled state, section B-B of Fig. 2.
- Fig. 5:: the plug, rear view (enlarged).
- Figs. 6, 7, 8:: the threaded stopper (enlarged).

The heat-insulated pipe consists of the working pipe 1, the hydroprotective pipe casing 2 and the heat insulation layer 3 of foamed and hardened material situated between them. The ends of the heat-insulated pipe are closed by the end plugs 4, wherein the working pipe 1 protrudes over the boundaries of the plugs 4.

The working pipe 1, the pipe casing 2 and the end plugs 4 can be made of polymer materials, for instance polyethylene. It is also possible to use other materials (ferrous or non-ferrous metals, composition materials etc.) or their combinations. For instance, the working pipe 1 can be metallic, while the pipe casing 2 and the end plugs 4 can be made of polymers, for instance low density polyethylene.

The end plugs 4 arranged at the ends of the hydroprotective pipe casing 2 have an axial opening with a cylindrical reception surface enclosing the working pipe 1, wherein both end plugs 4 are constructed identically. The end plugs 4 can be made monolithically or can be compositions (combinations) made of two or more parts. End plugs consisting of several parts (compositions, combinations) should be applied in large diameter heat-insulated pipes.

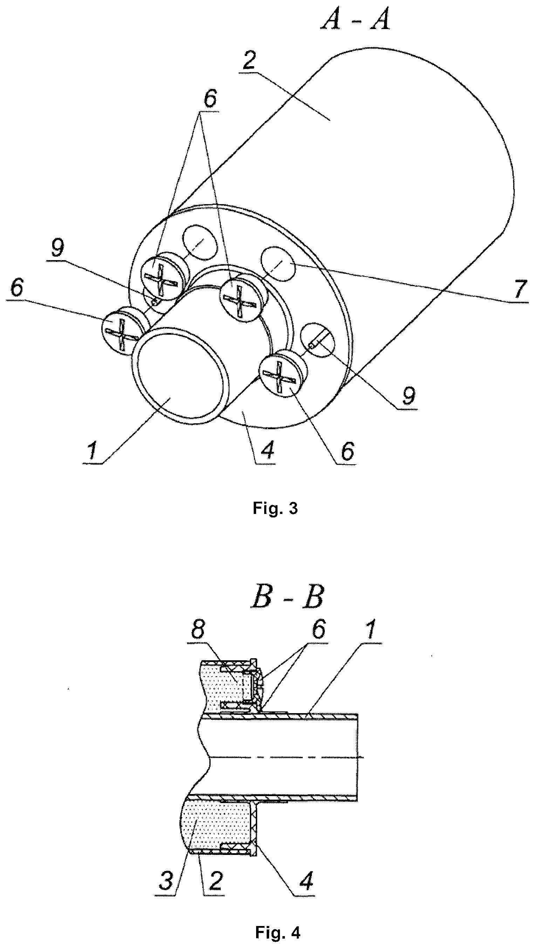

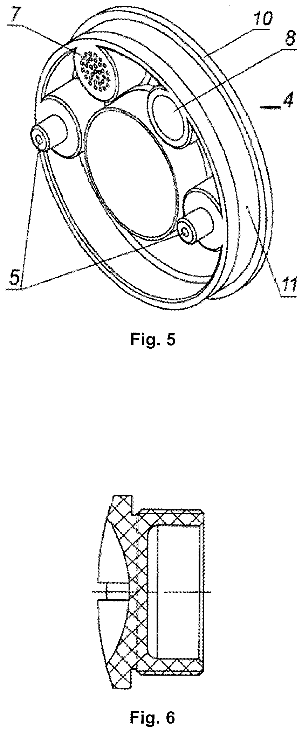

In a preferred embodiment the end plugs 4 have the shape of a sleeve (see Figs. 3 and 5) with a conically shaped wall 11 and a plane ring 10 along the external perimeter of the bottom of the sleeve (in the shape of a collar), wherein the plane ring is manufactured integrally with the bottom and the wall of the sleeve. The size of the plane ring 10 in radial direction corresponds (is equal) to the thickness of the wall of the pipe casing 2 so that a stable connection of the plug with the hydroprotective pipe casing can be achieved. In the plug, and particularly in the bottom of the sleeve there is an axial opening with a cylindrical reception surface - a neck for the passage and engagement of the external surface of the working pipe and a connection, for instance by press-fitting. The plug 4 with its conical wall 11 is placed into the internal space of the pipe casing 2, wherein the plane ring 10 (the collar part of the end plug) tightly abuts the end of the pipe casing 2 along the thickness of the pipe casing (their sizes being the same) and contacts the entire end surface of the pipe casing 2.

The end plugs 4 are arranged on the working pipe 1 (for instance by press-fitting) and are welded or glued to the external hydroprotective pipe casing 2, providing for hermetical sealing. It must be noted that the nondetachable connection of the plug with the hydroprotective pipe casing 2 can be of any kind provided that the connection is nondetachable and hermetical.

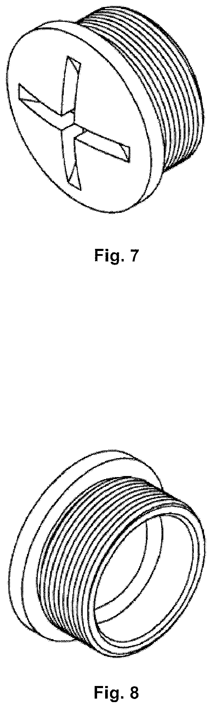

The end plugs 4 are provided with openings 5 of the same diameter having different functions. All openings are closed by stoppers 6, usually threaded ones. To attach the threaded stoppers 6, all openings in the end plug 4 including the opening with the perforated section 7 and the opening 8 predetermined for feeding the reaction component of the heat insulation are provided with flanges (protrusions, ribs) with an internal thread to receive the threaded stopper 6, wherein it is preferred that the flanges face the inside of the inter-pipe space (Fig. 5). All threaded stoppers 6 (Figs. 6-8) must have a groove to receive a screwdriver (or coin) and be identical for all openings of the end plug.

As a rule at least two apertures 5 in each end plug 4 are provided to guide out the elements 9 (ducts, data transfer buses etc.) of the system for monitoring the condition of the heat insulation layer, for instance, the ROCS or the LDS. The openings 5 are provided with flanges (protrusions) in the shape of a sleeve with an internal thread to receive the threaded stopper 6 and a small opening in the bottom for the element 9 - a conductor and/or data bus of the ROCS or LDS - to pass through. The cavity of the sleeve confined between its bottom and the threaded stopper must be sufficient to place the element (elements) 9 of the ROCS or LDS therein. The element 9, that is the conductor (or data bus) of the ROCS or LDS system for monitoring the heat insulation layer, can be placed in the cavity of the sleeve and the threaded stopper can be screwed in, thus insulating the conductor from the impact of the environment (from oxidation and mechanical damage), whereby it is guaranteed to be maintained in its working condition.

In the inter-pipe space between the working pipe 1 and the hydroprotective pipe casing 2 there is the heat insulation layer 3 obtained by hardening the foaming material fed into the inter-pipe space. The end plugs 4 must be hermetically connected with the working pipe 1 at that moment and be nondetachably and hermetically connected to the hydroprotective pipe casing 2. The hermetical nondetachable connection of the end plug with the hydroprotective pipe casing 2 and the working pipe 1 can be carried out by any known method.

To enable the foaming material to pass into the annular space between the pipe 1 and the pipe casing 2, in each plug 4 an opening 8 is provided, closed by the threaded stopper 6. When the operation of feeding the foaming material is carried out, first the corresponding threaded stopper 6 in one end plug 4 is unscrewed from the opening 8, through that opening the required amount of liquid components of the foaming material is fed into the internal annular space formed by the working pipe 1 and the pipe casing 2, and the threaded stopper 6 is screwed down. As a consequence of an interactive reaction between the components there is a foaming process wherein the heat insulation layer 3 is formed and is polymerised further up to complete hardening.

To let out the reaction gases formed during foaming and to remove the air displaced by the foaming material, in each end plug 4 there is an opening covered by the perforated section 7 with perforation openings having a general diameter of 0.1-3.0 mm. The openings of said diameter enable the gases to freely exit to the outside, while the viscous foaming material cannot pass through these openings, staying inside the annular inter-pipe space. Due to this, losses of heat insulation material in the process of manufacturing the heat-insulated pipe can be prevented. After hardening of the foaming material, the openings with the perforated section 7 are hermetically sealed by the stopper 6, wherein the stopper can be threaded or be connectable to the plug by turning the stopper (bayonet connection), or can be press-fit, or the stopper can be attached in a nondetachable way, in particular by glueing or welding.

The internal inter-pipe space is limited and closed due to the plugs 4 arranged at the ends, and due to the above-described plug construction it is hermetically sealed, since the foaming heat insulation fills it completely in the reaction process, while the openings 7 with the perforated section create the conditions for obtaining a uniform high-quality heat insulation layer 3 with a predetermined heat transfer coefficient.

Thus the disposable end plugs, arranged at the end sides of the heat-insulated pipe, fulfil the functions of, first, protecting the heat insulation layer from impacts of negative factors developing during storage, transport and assembly; second, they fulfil necessary technical functions in connection with the technical production process; third, during exploitation of the heat-insulated pipe an outflow of the working liquid beyond the boundaries of the heat-insulated pipe where the leakage occurred is prevented.

The assembly of the heat-insulated pipe is done as follows.

A working pipe, for instance a metallic pipe 1 is subjected to preliminary preparation: rust is removed, it is cleaned, the surface is degreased and it is placed in the plant. After the preliminary preparation has been carried out, an anticorrosive coating can be applied onto the external or internal surface of the working pipe.

The hydroprotective pipe casing 2 is supplied into the plant and is placed on an assembly table. If the hydroprotective pipe casing 2 is made of polymer and requires activation (for instance to increase adhesion), the necessary surfaces are treated by corona discharge.

Centering supports are arranged on the external surface of the working pipe 1, the elements 9 of the ROCS or LDS system are mounted. Subsequently the working pipe 1 is supplied into the internal space of the hydroprotective pipe casing 2, forming a "pipe-in-pipe" construction.

The end plugs 4 are arranged at the ends of the working pipe 1 concentrically to the working pipe and the hydroprotective pipe casing 2. The connection of the plugs with the thus assembled pipe casing 2 and working pipe 1 is carried out by known methods, for instance, for the pipe casing 2 by welding or glueing, for the working pipe by press-fitting or by any other known methods.

The threaded stoppers 6 at the openings 5 provided for guiding out the elements of the ROCS or the LDS are unscrewed at the plugs, and through a corresponding device the elements 9 - the conductors of the ROCS or LDS systems - are guided to the outside through a small opening in the bottom of the sleeve surrounding the opening 5. The diameter of the small opening in the bottom of the sleeve is the minimum required to guide the element 9 through it. Moreover the elements 9 of the ROCS or LDS are placed in the sleeve and the threaded stopper 6 is screwed in (this operation can also be done after the process of manufacturing the pipe is completed).

Further, the heat insulation layer 3 is formed. The threaded stopper 6 is screwed off from on one of the plugs 4, and through an opening 8 the liquid foaming components of the reaction formation of the heat insulation layer are fed, whereafter the opening 8 is closed by the threaded stopper 6. The interactive reaction between the components enables the formation of the heat insulation layer. To let the reaction gases out, the plug comprises a servicing device - an opening with perforations - with a perforated section 7, which provides for a free outlet of the gases but does not let the viscous composition of the heat insulation layer pass through. After the foaming is completed the heat insulation layer is hardened, subsequently the opening 8 is closed by the stopper 6.

Due to the arrangement of the disposable plugs 4 at the ends the internal inter-pipe space between the working pipe 1 and the pipe casing 2 has a limited, hermetically sealed volume because of the nondetachable connection, which makes it impossible for the liquid foaming components to flow to the outside, which is why the foaming heat insulation material in the reaction process completely fills the entire inter-pipe space.

The manufacturing of shaped products is carried out correspondingly, that is, initially an assembly of the semi-finished product as a "pipe-in-pipe" construction is carried out. The end plugs are arranged at the end sides concentrically to the working pipe and the hydroprotective pipe casing and are undetachably fixed, the elements (conductors) of the ROCS or LDS are guided out, and subsequently the components of the foaming heat insulation material are fed through the servicing opening in the end plug to form the insulation, and all servicing openings are closed by the stoppers.

## Claims

1. Heat-insulated pipe comprising an internal working pipe (1) arranged in an external hydroprotective pipe casing (2) forming a "pipe in pipe" construction, a heat insulation layer (3) filling an inter-pipe space between said pipes, and also end plugs (4), each of which is formed with an axial opening to receive the working pipe (1) and is arranged on the working pipe (1) providing thereby hermetically sealing, wherein openings (5, 7, 8), which are used in the manufacturing of the heat-insulated pipe, are provided in each end plug (4), at least one (8) of which being provided for pouring a foaming heat insulation composition, and at least one other opening for communication of the inter-pipe space with the heat insulation layer (3) with the external environment, wherein the end plugs (4) are nondetachably and hermetically connected to the external hydroprotective pipe casing (2) of the "pipe in pipe" construction, wherein in each end plug (4) are formed at least one opening (5) which is provided to guide out elements (9) of a system for monitoring the state of the heat insulation layer (3), the heat-insulated pipe being **characterized in that** additionally at least one opening for communication with the external environment of the inter-pipe space filled with the heat insulation layer (3) is covered with a perforated section (7), wherein all openings in the end plugs (4) are formed so that they can be closed by stoppers (6).

2. Heat-insulated pipe according to claim 1, ***characterized in that*** the end plugs (4) are formed as a sleeve with a conical wall (11) and a plane ring (10) around the perimeter of the wall, wherein the conical wall (11) is guided into an internal cavity of the hydroprotective pipe casing (2), in the bottom of the sleeve an axial opening is formed with a cylindrical reception surface to receive the working pipe (1), wherein the plane ring (10) corresponding in size in radial direction to the thickness of the wall of the hydroprotective pipe casing (2), is nondetachably and hermetically connected to the end of the hydroprotective pipe casing (2).

3. Heat-insulated pipe according to claim 1, ***characterized in that*** the stoppers (6) are threaded stoppers.

4. Heat-insulated pipe according to claim 3, ***characterized in that*** each opening in the end plug (4) is surrounded by a hollow cylindrical protrusion with an internal thread, in which the threaded stopper (6) is arranged, wherein the opening for the communication of the inter-pipe spacey with the outside environment covered by a perforated section (7) is formed with a diameter of the perforation openings of the perforated section of 0.1-3.0 mm, wherein the perforated section (7) is formed at the end of the cylindrical protrusion, while on the outside of the plug (4) the threaded stopper (6) is screwed into the cylindrical protrusion with the perforated section (7).

5. Heat-insulated pipe according to claim 3, ***characterized in that*** to increase the rigidity of the plug (4) construction the opening (8) for pouring the foaming heat insulation composition is formed with a flange and an internal thread into which the threaded stopper (6) is screwed.

6. Heat-insulated pipe according to claim 1, ***characterized in that*** the end plug (4) is formed monolithically or as a composition of several combined parts.

7. Heat-insulated pipe according to claim 1 or 3, ***characterized in that*** the stopper (6) is formed with a groove to receive a screwdriver and is unified for the openings of the end plug (4) including the opening with the perforated section (7).

8. Heat-insulated pipe according to claim 1, ***characterized in that*** the nondetachable connection of the end plug (4) with the hydroprotective pipe casing (2) is carried out as a welding or glueing connection.

9. Heat-insulated pipe according to claim 3, ***characterized in that*** the hydroprotective pipe casing (2) and/or the working pipe (1) and/or the end plugs (4) and/or the threaded stoppers (6) are made of polymer materials.

10. Heat-insulated pipe according to claim 1, ***characterized in that*** the end plugs (4) and the hermetically sealing stoppers (6) are made of materials allowing their re-processing.

11. Section of a pipeline with hydroprotection along the external surface and along the ends, ***characterized in that*** it is formed by a heat-insulated pipe according to any of claims 1 to 10.

## Patentansprüche

1. Wärmegedämmtes Rohr, umfassend ein inneres Arbeitsrohr (1), das in einem äußeren Feuchtigkeitsschutzrohrgehäuse (2) so angeordnet ist, dass eine "Rohr in Rohr"-Konstruktion gebildet wird, eine Wärmedämmschicht (3), die einen Rohrzwischenraum zwischen den Rohren füllt, sowie Endstopfen (4), von denen jeder mit einer axialen Öffnung ausgebildet ist, um das Arbeitsrohr (1) aufzunehmen, und an dem Arbeitsrohr (1) angeordnet ist, wodurch eine hermetische Abdichtung bereitgestellt wird, wobei Öffnungen (5, 7, 8) die bei der Herstellung des wärmegedämmten Rohrs verwendet werden, in jedem Endstopfen (4) vorgesehen sind, von denen wenigstens eine (8) zum Gießen einer Schaum-Wärmedämmzusammensetzung vorgesehen ist, sowie wenigstens eine weitere Öffnung für eine Kommunikation des Rohrzwischenraums mit der Wärmedämmschicht (3) mit der äußeren Umgebung, wobei die Endstopfen (4) nicht lösbar und hermetisch mit dem äußeren Feuchtigkeitsschutzrohrgehäuse (2) der "Rohr in Rohr"-Konstruktion verbunden sind, wobei in jedem Endstopfen (4) wenigstens eine Öffnung (5) ausgebildet ist, die dafür vorgesehen ist, Elemente (9) eines Systems zum Überwachen des Zustands der Wärmedämmschicht (3) nach außen zu führen, wobei das wärmegedämmte Rohr **dadurch gekennzeichnet ist, dass** zusätzlich wenigstens eine Öffnung für eine Kommunikation mit der äußeren Umgebung des mit der Wärmedämmschicht (3) gefüllten Rohrzwischenraums mit einem perforierten Abschnitt (7) bedeckt ist, wobei alle Öffnungen in den Endstopfen (4) so ausgebildet sind, dass sie durch Verschlüsse (6) verschlossen werden können.

2. Wärmegedämmtes Rohr nach Anspruch 1, **dadurch gekennzeichnet, dass** die Endstopfen (4) als Hülse mit einer konischen Wand (11) und einem ebenen Ring (10) um den Umfang der Wand ausgebildet sind, wobei die konische Wand (11) in einen inneren Hohlraum des Feuchtigkeitsschutzrohrgehäuses (2) geführt wird und in der Unterseite der Hülse eine axiale Öffnung mit einer zylindrischen Aufnahmefläche zur Aufnahme des Arbeitsrohrs (1) ausgebildet ist, wobei der ebene Ring (10), der bezüglich der Größe in radialer Richtung der Dicke der Wand des Feuchtigkeitsschutzrohrgehäuses (2) entspricht, nicht lösbar und hermetisch mit dem Ende des Feuchtigkeitsschutzrohrgehäuses (2) verbunden ist.

3. Wärmegedämmtes Rohr nach Anspruch 1, **dadurch gekennzeichnet, dass** die Verschlüsse (6) Gewindeverschlüsse sind.

4. Wärmegedämmtes Rohr nach Anspruch 3, **dadurch gekennzeichnet, dass** jede Öffnung in dem Endstopfen (4) von einem hohlen zylindrischen Vorsprung mit einem inneren Gewinde umgeben ist, in dem der Gewindeverschluss (6) angeordnet ist, wobei die Öffnung für die Kommunikation des Rohrzwischenraums mit der äußeren Umgebung, die von einem perforierten Abschnitt (7) bedeckt ist, mit einem Durchmesser der Perforationsöffnungen des perforierten Abschnitts von 0,1-3,0 mm ausgebildet ist, wobei der perforierte Abschnitt (7) am Ende des zylindrischen Vorsprungs ausgebildet ist, während an der Außenseite des Stopfens (4) der Gewindeverschluss (6) in den zylindrischen Vorsprung mit dem perforierten Abschnitt (7) geschraubt wird.

5. Wärmegedämmtes Rohr nach Anspruch 3, **dadurch gekennzeichnet, dass** zur Erhöhung der Steifigkeit der Konstruktion des Stopfens (4) die Öffnung (8) zum Gießen der Schaum-Wärmedämmzusammensetzung mit einem Flansch und einem inneren Gewinde ausgebildet ist, in das der Gewindeverschluss (6) geschraubt wird.

6. Wärmegedämmtes Rohr nach Anspruch 1, **dadurch gekennzeichnet, dass** der Endstopfen (4) einteilig oder als Zusammensetzung mehrerer kombinierter Teile ausgebildet ist.

7. Wärmegedämmtes Rohr nach Anspruch 1 oder 3, **dadurch gekennzeichnet, dass** der Verschluss (6) mit einer Nut zur Aufnahme eines Schraubenziehers ausgebildet ist und bezüglich der Öffnungen der Endstopfen (4) einschließlich der Öffnung mit dem perforierten Abschnitt (7) vereinheitlicht ist.

8. Wärmegedämmtes Rohr nach Anspruch 1, **dadurch gekennzeichnet, dass** die nicht lösbare Verbindung des Endstopfens (4) mit dem Feuchtigkeitsschutzrohrgehäuse (2) als Schweiß- oder Klebeverbindung ausgeführt ist.

9. Wärmegedämmtes Rohr nach Anspruch 3, **dadurch gekennzeichnet, dass** das Feuchtigkeitsschutzrohrgehäuse (2) und/oder das Arbeitsrohr (1) und/oder die Endstopfen (4) und/oder die Gewindeverschlüsse (6) aus Polymermaterialien hergestellt sind.

10. Wärmegedämmtes Rohr nach Anspruch 1, **dadurch gekennzeichnet, dass** die Endstopfen (4) und die hermetisch abdichtenden Verschlüsse (6) aus Materialien hergestellt sind, die eine Wiederverarbeitung ermöglichen.

11. Abschnitt einer Rohrleitung mit Feuchtigkeitsschutz entlang der äußeren Oberfläche und entlang der Enden, **dadurch gekennzeichnet, dass** er durch ein wärmegedämmtes Rohr nach einem der Ansprüche 1 bis 10 gebildet wird.

## Revendications

1. Tuyau calorifugé comprenant un tuyau de travail interne (1) agencé dans une gaine de tuyau hydroprotectrice externe (2) formant une construction « tuyau à double enveloppe », une couche d'isolation thermique (3) remplissant un espace entre les tuyaux entre lesdits tuyaux, et également des bouchons d'extrémité (4), qui comportent chacun une ouverture axiale pour recevoir le tuyau de travail (1) et sont disposés sur le tuyau de travail (1), assurant ainsi l'étanchéité, dans lesquels des ouvertures (5, 7, 8), qui sont utilisées dans la fabrication du tuyau calorifugé, sont ménagées dans chaque bouchon d'extrémité (4), dont au moins une (8) est prévue pour verser une composition d'isolation thermique moussante, et au moins une autre ouverture pour la communication de l'espace entre les tuyaux avec la couche d'isolation thermique (3) avec l'environnement extérieur, dans lequel les bouchons d'extrémité (4) sont raccordés de manière inamovible et hermétique à la gaine de tuyau hydroprotectrice externe (2) de la construction « tuyau à double enveloppe », dans lequel dans chaque bouchon d'extrémité (4) sont formées au moins une ouverture (5) servant à guider vers l'extérieur les éléments (9) d'un système pour la surveillance de l'état de la couche d'isolation thermique (3), le tuyau calorifugé étant **caractérisé en ce qu'**en outre, au moins une ouverture pour la communication avec l'environnement extérieur de l'espace entre les tuyaux rempli de la couche d'isolation thermique (3) soit recouvert d'une section perforée (7), dans lequel toutes les ouvertures dans les bouchons d'extrémité (4) sont formées de manière à pouvoir être fermées par des obturateurs (6).

2. Tuyau calorifugé selon la revendication 1, **caractérisé en ce que** les bouchons d'extrémité (4) sont formés sous la forme d'un manchon avec une paroi conique (11) et une bague plane (10) autour du périmètre de la paroi, dans lequel la paroi conique (11) est guidée dans une cavité interne de la gaine de tuyau hydroprotectrice (2), dans le fond du manchon une ouverture axiale est formée avec une surface de réception cylindrique pour recevoir le tuyau de travail (1), dans lequel la bague plane (10) de dimension correspondante dans la direction radiale à l'épaisseur de la paroi de la gaine de tuyau hydroprotectrice (2), est raccordée de manière inamovible et hermétique à l'extrémité de la gaine de tuyau hydroprotectrice (2).

3. Tuyau calorifugé selon la revendication 1, **caractérisé en ce que** les obturateurs (6) sont des obturateurs filetés.

4. Tuyau calorifugé selon la revendication 3, **caractérisé en ce que** chaque ouverture du bouchon d'extrémité (4) est entourée d'une saillie cylindrique creuse à filetage interne, dans laquelle est agencé l'obturateur fileté (6), dans lequel l'ouverture pour la communication de l'espace entre les tuyaux avec l'environnement extérieur recouvert par une section perforée (7) est formée avec un diamètre des ouvertures de perforation de la section perforée de 0,1 à 3,0 mm, dans lequel la section perforée (7) est formée à l'extrémité de la saillie cylindrique, tandis que l'obturateur fileté (6) est vissé à l'extérieur du bouchon (4) dans la saillie cylindrique avec la section perforée (7).

5. Tuyau calorifugé selon la revendication 3, **caractérisé en ce que** pour augmenter la rigidité de la construction formant bouchon (4), l'ouverture (8) pour la coulée de la composition d'isolation thermique moussante est formée avec une bride et un filetage interne dans lequel est vissé l'obturateur fileté (6).

6. Tuyau calorifugé selon la revendication 1, **caractérisé en ce que** le bouchon d'extrémité (4) est formé de manière monolithique ou en tant que composition de plusieurs parties combinées.

7. Tuyau calorifugé selon la revendication 1 ou 3, **caractérisé en ce que** l'obturateur (6) est formé d'une gorge pour recevoir un tournevis et est unifié pour les ouvertures du bouchon d'extrémité (4), y compris l'ouverture avec la section perforée (7).

8. Tuyau calorifugé selon la revendication 1, **caractérisé en ce que** le raccordement inamovible du bouchon d'extrémité (4) à la gaine de tuyau hydroprotectrice (2) est réalisé sous la forme d'un raccordement par soudage ou collage.

9. Tuyau calorifugé selon la revendication 3, **caractérisé en ce que** la gaine de tuyau hydroprotectrice (2) et/ou le tuyau de travail (1) et/ou les bouchons d'extrémité (4) et/ou les obturateurs filetés (6) sont réalisés en matériaux polymères.

10. Tuyau calorifugé selon la revendication 1, **caractérisé en ce que** les bouchons d'extrémité (4) et les obturateurs hermétiques (6) sont réalisés en matériaux permettant leur retraitement.

11. Section d'une conduite avec une hydroprotection le long de la surface externe et le long des extrémités, **caractérisée en ce qu'**elle est formée par un tuyau calorifugé selon l'une quelconque des revendications 1 à 10.
